# EUROPEAN PATENT SPECIFICATION

(11) **EP 1 276 386 B1**
(45) Date of publication and mention of the grant of the patent: **22.06.2005**
(21) Application number: 01909769.0
(22) Date of filing: 16.02.2001
(51) Int. Cl.: A23G 3/30

(54) **CHEWING GUM CONTAINING ENCAPSULATED ABRASIVE FILLER SUBSTANCE**
KAUGUMMI MIT EINGEKAPSELTEM SCHLEIFAKTIVEM FÜLLSTOFF
GOMME A MACHER CONTENANT UNE SUBSTANCE DE CHARGE ABRASIVE ENCAPSULEE

(30) Priority: 26.04.2000 IT TO000394
(43) Date of publication of application: 22.01.2003
(73) Proprietor: Perfetti Van Melle S.p.A., 20020 Lainate (IT)
(72) Inventor: COLLE, Roberto, I-20080 Basiglio Milano (IT); FUGANTI, Claudio, I-20129 Milano (IT)
(74) Representative: Rambelli, Paolo
(86) International application number: PCT/EP2001/001762
(87) International publication number: WO 2001/080661

(56) References cited:
- US-A- 5 618 517
- US-A- 5 629 035

## Description

The present invention relates to a chewing gum composition including an abrasive substance, useful for oral hygiene and particularly for the removal and the prevention of the formation of dental plaque.

In the prior art chewing gum compositions are known containing abrasive substances which are described as useful for inhibiting or reducing dental plaque in the oral cavity.

US 4 400 372 describes a chewing gum composition containing a gum base, at least one source of non-toxic acid and particles of calcined kaolin having an average diameter of 2 µm and where substantially all the particles have a diameter less than about 20 µm. As described, the chewing gum composition, upon mastication, performs a cleaning action on the dental enamel and inhibits the reformation of plaque.

US 4 828 820 describes a chewing gum composition able to remove dental plaque, which contains from 20% to 40% by weight of an abrasive of calcium carbonate having a specific grain size.

WO 97/02009, in turn, describes a gum base composition which includes an intimate mixture of an elastomer and of abrasive silica, where the abrasive silica has an average particle size lying between 1 and 8 µm.

A common problem inherent in all the chewing gum compositions containing abrasive substances is that of achieving an effective cleaning action upon chewing, naturally avoiding the damage to the enamel of the teeth and likewise avoiding an unpleasant organoleptic sensation of earthiness.

For this reason the main parameters which are taken into consideration in the formulation of gum base compositions and of chewing gum are essentially the nature of the abrasive agent, its grain size and the quantity for incorporation in the gum.

For the purpose of resolving the above-stated problems the subject of the present invention is a chewing gum including a filler of abrasive substance which is characterised in that the said abrasive substance is included in microspheres of cross-linked alginate.

Thanks to the said characteristic the microgranules of abrasive substance, embedded in the alginate matrix material, are particularly protected in the initial chewing of the chewing gum; thus, in this initial chewing phase, an unpleasant sensation of earthiness on the palate is avoided; moreover, since the microspheres are relatively fragile, they break up directly upon contact with the teeth during the chewing, releasing the abrasive substances at the site at which they are to perform their abrasive action in a progressive manner.

The preparation and use of encapsulates based on hydrocolloids and particularly alginate has already been described in the patent literature, for the purpose of encapsulating active principles such as sweetener, flavourings and pharmaceuticals, to achieve a prolonged and delayed release of such active principles.

EP-A-0 202 819 describes a release system for chewing gums, which comprises an active agent rendered insoluble in a matrix of cross-linked hydrocolloids based on alginates or carraginates of polyvalent cations.

This release system is utilised for encapsulating active agents such as, in particular, essential oils, sweeteners and pharmaceuticals. However, there is no indication of the possibility, and even less of the convenience, of encapsulating in alginate an abrasive substance useful for the purposes of prevention and removal of dental plaque.

As mentioned, the microspheres of alginate used in the scope of the present invention typically have an alginate matrix in which the granules of abrasive substance are dispersed; it is however also contemplated, within the scope of the definition of microspheres, that the granules of abrasive substance be covered by a film of alginate.

The microspheres preferably have a size, expressed as equivalent average diameter, lying between 0.6 and 1.5 mm; it is, however, preferable that such microspheres should have a relatively narrow grain size distribution curve, for example with equivalent average diameter lying between 1,000 and 1,200 µm.

The relative proportion of abrasive granular substance with respect to alginate is preferably between 80-99% by weight of abrasive substance and correspondingly 20-1% by weight of alginate.

The microspheres may however encapsulate smaller percentages of active agents, in particular flavourings, colouring and active principles for the care and treatment of the teeth, the percentage by weight, referred to 100 parts by weight of alginate and microgranules, generally does not exceed values between 0.1% and 1% by weight.

The abrasive granular substances included in the microspheres are typically filler materials such as, for example, abrasive silica, talc, kaolin, calcium carbonate, but may also include other solid abrasive materials including therein organic substances which have an adjuvant mechanical action in the removal of plaque as long as such substances are admitted by the current laws for incorporation into chewing gums.

Typically, the particles of abrasive substance have an equivalent average diameter lying between 2 and 100 µm, values lying between 4 and 60 µm being preferred, and between 6 and 10 µm even more preferred.

A preferred material is abrasive silica of the type used as abrasive filler in toothpaste formulations.

Mixtures of abrasive substances can also be utilised, such as, for example, particles comprising a core of calcium carbonate and a shell of silica as described in WO 97/39728, or mixtures of silica-calcium carbonate, silica-talc-calcium, carbonate, silica-talc, or calcium carbonate-talc.

The procedures for the preparation of alginate microspheres are known per se and exploit the property of alginates which are hydrosoluble as monovalent cations, such as sodium and potassium, to give rise to reactions of ionic substitution with polyvalent cations to form a gel which - when the substitution is completed - form a cross-linked precipitate insoluble in water.

Within the scope of the present invention calcium ions are utilised as polyvalent cations which are added to an aqueous solution of hydrosoluble alginate (particularly sodium alginate) in the form of salts.

Thus, for example, the preparation of the microspheres contemplates the introduction into an aqueous solution of calcium chloride of an aqueous solution of sodium alginate, containing, in dispersion or in suspension, an inert abrasive material and possibly one or more active principles which can be loose or suspended or dispersed in the alginate solution.

A colourant chosen from among those admitted by food legislation, can be included in the aqueous solution of calcium chloride or in the solution of sodium alginate for the purpose of achieving its incorporation in the microspheres to obtain coloured microspheres. In particular, the aqueous solution of alginate containing the abrasive non-hydrosoluble material is supplied through a nozzle into the aqueous solution of calcium chloride, whilst controlling the rate of addition and the conditions of agitation for the purpose of obtaining microspheres having the desired grain size.

The microspheres of calcium alginate which form in this manner incorporate within their interior the inert material and/or the active principles present in the two solutions which are mixed. For the purpose of encouraging and accelerating cross-linking of the alginate the addition of an acid as a cross-linking initiator can be contemplated.

The active principles which can be added to the solution of alginate in order to be encapsulated in the microspheres comprise in particular fluorine ions in the form of a fluoride salt acceptable for food use, salts of phosphorus and calcium, salts or phosphorous and calcium bound in a stable or metastable manner to phosphoproteins such as, for example those present in hydrolised casaein, as well as flavourings substances which - advantageously - correspond to the flavourings present in the hydrosoluble part of the chewing gum.

Moreover, alimentary integrators, vitamins and intensive sweeteners can be included as active principles.

In the procedure for preparation of the microspheres these latter are recovered from the reaction mass by means of filtration and are subsequently washed with water and dried to an appropriate moisture content; the preferred moisture content lies between 0.1% and 5% by weight - referred to the weight of the microsphere, in that with this moisture content it has been found that the microspheres are sufficiently tenacious to resist intact the mechanical washings necessary for the production of chewing gum, but simultaneously sufficiently fragile that upon chewing they break up on the surface of the tooth, assisting in the mechanical removal of the plaque and releasing the desired active principles onto the surface of the teeth.

The microspheres thus obtained, preferably having the above stated moisture content, are incorporated in a chewing gum composition typically in concentrations from 1% to 10% by weight referred to the total weight of the composition or preferably between 3% and 5% by weight.

The preparation of the chewing gum is effected by means of conventional methods utilising commercially available gum bases.

Typically, the gum bases utilised comprise:
- From .5% to 50% by weight of naturally occurring synthetic elastomers, particularly polyisobutylene, isobutbutylene - isoprene copolymer and butadienestyrene;
- From 5% to 60% by weight of resin acting as elastomer plasticisers, including polyterpene resins, colophony esters and polyvinylacetate of high or low molecular weight;
- From 5% to 40% of softening agents (softeners) chosen from among the microcrystalene waxes, hydrogenated or partially hydrogenated vegetable oils and their mixtures;
- From 1% to 15% by weight of emulsifiers such as lecithin, mono- and di-glyceride acetates and triacetates; and
- From 0% to 60% by weight of optional fillers chosen from the fillers conventionally utilised in the preparation of the gum base.

The chewing gum can be prepared by means of a conventional process of mixing the gum base with the alginate microspheres, filler, sweeteners, flavourings and further high or low intensity sweeteners and possible plastisisers. Preferably, the chewing gum compositions have a water content not greater than 5% by weight.

### Example 1

An aqueous solution of sodium alginate was prepared containing from 1% to 10% by weight of alginate, in the specific case 5% by weight of sodium alginate. To this solution silica particles (Syloid AL1 F.P.®, Grace Company) were added having a grain size lying between 6.0 and 7.6 µm, the quantity being about 40% by weight referred to the weight of the aqueous solution. The suspension of alginate and silica solutions, maintained homogeneous by agitation, is introduced in the form of minute droplets via a nozzle into an aqueous solution of calcium chloride at 1% by weight, subjected to slow agitation. Upon coming into contact with the calcium chloride the droplets of sodium alginate - containing the inert silica - transform into droplets of calcium alginate which enclose the inert silica. After about five minutes the supernatant is decanted from the precipitated microspheres and these are filtered through a mesh filter having a mesh size of 1 mesh. The microspheres are washed on a filter with a little water and dried in an oven under vacuum at 50°C to a water content of about 3%-5% by weight.

### Example 2

The same procedure as described in example 1 utilising, in place of the silica carbonate of calcium and talc respectively having a grain size substantially corresponding to that of the silica utilised in the proceeding example.

### Example 3

Procedure as in Example 1, adding a food colouring to the silica in concentrations lying between 0.1% and 10% referred to the weight of the aqueous solution of alginate; proceeding as in example 1 coloured microspheres are obtained.

### Example 4

Proceeding as in Example 1, adding to the solution of sodium alginate an active principle represented by potassium flouride in quantities of from 0.1% to 10% by weight referred to the weight of the aqueous solution of alginate.

The microspheres obtained according to the above - described examples were utilised for the production of chewing gum containing from 15% to 50% by weight of gum base, from about 20% to about 60% of sweetening fillers, 0.5% - 15% of plasticisers and from 1% to 10% of alginate microspheres including, moreover, flavourings and sweeteners, preferably high intensity.

## Claims

1. A chewing gum composition including an abrasive filler substance, **characterised in that** the said abrasive filler substance is selected from the group consisting of abrasive silica, calcium carbonate, talc, kaolin and mixtures thereof and is encapsulated in microspheres of cross-linked alginate.

2. A chewing gum composition according to Claim 1, **characterised in that** the said microspheres have an equivalent average diameter lying between 0.6 and 1.5 mm.

3. A chewing gum composition according to Claim 1, **characterised in that** the said microspheres have an equivalent average diameter lying between 1 and 1.2 mm.

4. A chewing gum composition according to any of Claims 1 to 3, **characterised in that** the said microspheres are present in quantities from 1% to 10% by weight referred to the weight of the chewing gum.

5. A chewing gum composition according to any of Claims 1 to 4, **characterised in that** the said abrasive filler substance is present in particles having dimensions, expressed as equivalent average diameter, lying between 2 and 100 µm.

6. A chewing gum composition according to Claim 5, **characterised in that** the said abrasive filler substance has a particle size lying between 6 and 10 µm.

7. A chewing gum composition according to any preceding claim, **characterised in that** the said microspheres comprise from 80% to 99% by weight of abrasive filler substance.

8. A chewing gum composition according to any preceding claim, **characterised in that** the said microspheres further include ingredients chosen from flavourings, sweeteners, active agents and mixtures thereof.

## Patentansprüche

1. Kaugummi-Zusammensetzung mit einer abrasiven Füllstoffsubstanz, **dadurch gekennzeichnet, dass** die abrasive Füllstoffsubstanz aus der Gruppe bestehend aus abrasiver Kieselsäure, Calciumcarbonat, Talk, Kaolin und Mischungen davon ausgewählt ist und in Mikropartikel aus quervernetztem Alginat verkapselt ist.

2. Kaugummi-Zusammensetzung nach Anspruch 1, **dadurch gekennzeichnet, dass** die Mikropartikel einen entsprechenden mittleren Durchmesser zwischen 0,6 und 1,5 mm aufweisen.

3. Kaugummi-Zusammensetzung nach Anspruch 1, **dadurch gekennzeichnet, dass** die Mikropartikel einen entsprechenden mittleren Durchmesser zwischen 1 und 1,2 mm aufweisen.

4. Kaugummi-Zusammensetzung nach jedem der Ansprüche 1 bis 3, **dadurch gekennzeichnet, dass** die Mikropartikel in Mengen von 1 bis 10 Gew.-% bezogen auf das Gewicht des Kaugummis vorhanden sind.

5. Kaugummi-Zusammensetzung nach jedem der Ansprüche 1 bis 4, **dadurch gekennzeichnet, dass** die abrasive Füllstoffsubstanz in Partikeln vorliegt, welche Größen, die als entsprechender mittlerer Durchmesser ausgedrückt werden, aufweisen, die zwischen 2 und 100 µm liegen.

6. Kaugummi-Zusammensetzung nach Anspruch 5, **dadurch gekennzeichnet, dass** die abrasive Füllstoffsubstanz eine Partikelgröße zwischen 6 und 10 µm aufweist.

7. Kaugummi-Zusammensetzung nach jedem vorherigen Anspruch, **dadurch gekennzeichnet, dass** die Mikropartikel 80 - 99 Gew.-% einer abrasiven Füllstoffsubstanz enthalten.

8. Kaugummi-Zusammensetzung nach jedem vorherigen Anspruch, **dadurch gekennzeichnet, dass** die Mikropartikel weiters Bestandteile, ausgewählt aus Aromastoffen, Süßstoffen, aktiven Wirkstoffen und Mischungen davon, enthalten.

## Revendications

1. Composition de gomme à mâcher comprenant une substance de charge abrasive, **caractérisée en ce que** ladite substance de charge abrasive est choisie dans le groupe comprenant la silice abrasive, le carbonate de calcium, le talc, le kaolin et leurs mélanges et est encapsulée dans des microsphères d'alginate réticulé.

2. Composition de gomme à mâcher selon la revendication 1, **caractérisée en ce que** lesdites microsphères ont un diamètre moyen équivalent se situant entre 0,6 et 1,5 mm.

3. Composition de gomme à mâcher selon la revendication 1, **caractérisée en ce que** lesdites microsphères ont un diamètre moyen équivalent se situant entre 1 et 1,2 mm.

4. Composition de gomme à mâcher selon l'une quelconque des revendications 1 à 3, **caractérisée en ce que** lesdites microsphères sont présentes à raison de 1 % à 10 % en poids calculé sur le poids de la gomme à mâcher.

5. Composition de gomme à mâcher selon l'une quelconque des revendications 1 à 4, **caractérisée en ce que** ladite substance de charge abrasive est présente dans des particules ayant des dimensions exprimées en tant que diamètre moyen équivalent, se situant entre 2 et 100 µm.

6. Composition de gomme à mâcher selon la revendication 5, **caractérisée en ce que** ladite substance de charge abrasive présente une dimension de particule se situant entre 6 et 10 µm.

7. Composition de gomme à mâcher selon l'une quelconque des revendications précédentes, **caractérisée en ce que** lesdites microsphères comportent de 80 % à 99 % en poids de substance de charge abrasive.

8. Composition de gomme à mâcher selon l'une quelconque des revendications précédentes, **caractérisée en ce que** lesdites microsphères renferment, en outre, des ingrédients choisis dans le groupe des aromatisants, des adoucissants, des agents actifs et leurs mélanges.
